# EUROPÄISCHE PATENTANMELDUNG

(11) **EP 1 300 325 A2**
(43) Veröffentlichungstag der Anmeldung: **09.04.2003**
(21) Anmeldenummer: 02021857.4
(22) Anmeldetag: 30.09.2002
(51) Int. Cl.: B62D 29/00

(54) **Kunststoff-Metall-Verbundbauteil für Rahmenkonstruktionen**

(30) Priorität: 08.10.2001 DE 10149522
(71) Anmelder: Bayer Aktiengesellschaft, 51368 Leverkusen (DE)
(72) Erfinder: Klocke, Martin, 50670 Köln (DE); Koch, Boris, 42929 Wermelskirchen (DE)

(57) **Zusammenfassung**

Es wird ein Kunststoff-Metall-Verbundbauteil und seine Verwendung für Rahmenkonstruktionen beschrieben. Das Verbundbauteil besteht aus mindestens drei Profilen, bei dem jeweils zwei Profile (1, 4) mit einem freien Ende an ein weiteres anderes Profil (3) angrenzen oder ineinander eintauchen, wobei im Bereich der Anschlussstelle der Profile (1, 3, 4) mindestens ein Verstärkungselement (2) angebracht ist, das einen Formschluss mit den Profilen (1, 3, 4) bildet, und wobei die Profile (1, 3, 4) durch im Bereich der Anschlussstelle angespritzten thermoplastischen Kunststoff (10, 11, 12, 13) miteinander verbunden sind, dadurch gekennzeichnet, dass mindestens zwei Profile (1, 4) endständig Ausbuchtungen (5) aufweisen, die von dem Verstärkungselement (2) umfasst sind.

## Beschreibung

Die Erfindung betrifft ein Kunststoff-Metall-Verbundbauteil und seine Verwendung für Rahmenkonstruktionen.

Die Erfindung betrifft insbesondere ein Verbundbauteil hergestellt durch Fügen von Profilen durch Schaffung von hochfesten und hochsteifen Verbundbauteilen, insbesondere in Kunststoff-Metall-Hybridbauweise, wobei das Fügen der Profile und das Herstellen der Verbundbauteile gleichzeitig durch einen Umformprozess thermoplastischer Formmassen erreicht wird.

Bei dem Verfahren werden Verbundbauteile erzeugt, die aus hoch festen und hoch steifen Komponenten wie z.B. aus Stahl oder Composites bestehen, die mit Hilfe eines thermoplastischen Kunststoffes gefügt, in Position gehalten und in Form von Rippen oder massiven Wänden zusätzlich gestützt werden.

Hoch feste Verbindungen von hoch belastbaren Trägern, Profilen, Platten, etc. findet man häufig im Fahrzeug- oder Maschinenbau. Dabei werden überwiegend Träger aus Stahl oder Aluminium eingesetzt, die in den Fügebereichen miteinander verschweißt oder verklebt sind. Zur weiteren Versteifung der Verbindungsstellen, nachfolgend auch als Knotenpunkte bezeichnet, werden Verstrebungen integriert oder Gussknoten z.B. aus Al-Druckguss eingesetzt. Eine weitere Möglichkeit ist der Einsatz von Halbzeugen aus Composite (langglasfaserverstärkter Kunststoff). Diese werden meist durch das Anlaminieren von Knotenelementen, die ebenfalls aus Composites bestehen, miteinander verbunden.

Diese in der Praxis üblichen Vorgehensweisen haben den Nachteil, dass die Fügeprozesse zeitaufwendig sind und nur eine beschränkte Maßgenauigkeit und Reproduzierbarkeit in Serienfertigungen erlauben. Werden Verstrebungen zur zusätzlichen Versteifung der Knotenelemente eingesetzt, müssen diese, um ein Versagen durch Beulen oder Knicken zu verhindern, dickwandig (1 bis 3mm) ausgeführt werden. (Übliche Wandstärken von in der Automobilindustrie eingesetzten Blechen liegen im PKW-Bau bei 0,7 bis 1,2 mm, im Motorroller-Bau bei 0,7 mm bis 3mm). Dies erhöht das Gewicht des Bauteils, was den Bestrebungen der Konstrukteure insbesondere im Fahrzeugbau entgegensteht.

Der Erfindung liegt daher die Aufgabe zugrunde, ein Verbundbauteil mit Knotenpunkten der eingangs erwähnten Art zu schaffen, das sowohl die hochfeste und hochsteife Verbindung von Trägern und Platten ermöglicht als auch ein wirtschaftliches Fügen von Halbzeugen und Bauteilkomponenten zu Bauteilen erlauben. Außerdem soll die Fertigung der Knotenelemente mit hoher Maßhaltigkeit und Reproduzierbarkeit geschehen. Eine besondere Aufgabe besteht darin, die Profile im Werkzeug so anzuordnen, dass sie durch einfache Schieberoperationen im Spritzgiesswerkzeug mit Kunststoff zu verstärken und leicht aus dem Werkzeug zu entformen sind. Es soll damit der Herstellprozess für Rahmenkonstruktionen der unterschiedlichsten Anwendungen vereinfacht werden.

Diese Aufgabe wird erfindungsgemäß dadurch gelöst, daß zum Verbinden der Profile und zum Versteifen der Verbundbauteile Verstärkungselemente aus hochfesten Werkstoffen verwendet werden, die formschlüssig im Knotenbereich (Anschlussstelle der Profile) angeordnet werden. Anschließend wird der Knotenbereich mit einem thermoplastischen Kunststoff versehen, der alle Einzelteile zusammenhält und ein vorzeitiges Ausbeulen oder Knicken der hochfesten Einzelteile im Knotenbereich verhindert. Die Aufgabe wird ferner erfindungsgemäß dadurch gelöst, dass mindestens zwei Profile endständig Ausbuchtungen aufweisen, die von dem Verstärkungselement umfasst sind.

Gegenstand der Erfindung ist ein Verbundbauteil aus mindestens drei Profilen, bei dem jeweils zwei Profile (1, 4) mit einem freien Ende an ein weiteres anderes Profil (3) angrenzen, insbesondere miteinander Kontakt haben, oder ineinander eintauchen, wobei im Bereich der Anschlussstelle der Profile (1, 3, 4) mindestens ein Verstärkungselement (2) angebracht ist, das einen Formschluss mit den Profilen (1, 3, 4) bildet, und wobei die Profile (1, 3, 4) durch im Bereich der Anschlussstelle angespritzten thermoplastischen Kunststoff (10, 11, 12, 13) miteinander verbunden sind, dadurch gekennzeichnet, dass mindestens zwei Profile (1, 4) endständig Ausbuchtungen (5) aufweisen, die von dem Verstärkungselement (2) umfasst sind.

Profile im Sinne der Erfindung sind unabhängig voneinander offene oder geschlossene Profile (insbesondere offene Profile) aus Kunststoff oder Metall, bevorzugt Metall, besonders bevorzugt aus Stahl, Aluminium, Magnesium mit beliebigem Querschnitt. Bevorzugt sind offene U-Profile bzw. Hut-Profile, die teilweise an ihrem Ende geschlossen sind. Die Profile haben bevorzugt eine Wandstärke von 0,3 bis 3mm, besonders bevorzugt von 0,5 bis 2,5mm.

Die Verstärkungselemente werden als hochfest verbindende Komponenten in Form von z.B. Klammern, Halbschalen oder weiteren Profilen (incl. Zusatzlaschen und Abkantungen) eingesetzt, die in der Form den zu fügenden Profilen und Bauteilkomponenten angepasst sind und insbesondere mit Hilfe von Verstrebungen und/oder bevorzugt mit weiteren Stützprofilen gegeneinander zusätzlich abgestützt sind. Sie werden um die zu fügenden Profile und anderen Bauteilkomponenten gelegt. Die Verstärkungselemente dienen zur Verstärkung und Versteifung der Verbindungsstelle und sind so gestaltet, dass sie den Formschluss mit den zu fügenden Profilen und Bauteilkomponenten bilden.

Bevorzugt besteht das Verstärkungselement aus Metall, insbesondere Stahl, Aluminium oder Magnesium, aus Keramik oder hochfestem Kunststoff, insbesondere Duromeren oder langfaserverstärktem Kunststoff oder aus Kunststoffen, die mit technischen Textilien verstärkt sind.

Insbesondere bevorzugt ist das Verstärkungselement als Halbschale ausgebildet.

Zur besonderen Verstärkung des Verbundes ist das Verstärkungselement bevorzugt mit zusätzlichen Stützwänden versehen.

Eine besondere Stabilität erreicht das Verbundbauteil wenn in einer bevorzugten Form die Ausbuchtungen der Profile flächigen Kontakt mit dem an diese angrenzenden weiteren Profile haben.

Die Stabilität des Verbundbauteils kann weiter dadurch erhöht werden, dass die Profile unabhängig voneinander einen zusätzlichen Verstärkungsrand aufweisen.

In einer weiteren bevorzugten Ausgestaltung der Erfindung weisen die Profile und das Verstärkungselement unabhängig voneinander eine Kantenumspritzung mit thermoplastischem Kunststoff auf.

Ein bevorzugtes Verbundbauteil ist so gestaltet, dass die Profile im Bereich ihrer Anschlussstelle in einer Ebene angeordnet sind. Hiermit werden stabile Konstruktionen mit Profilen ermöglicht, bei denen ein einzelner Träger in zwei seitlich zu diesem Träger angeschlossene Träger übergeht und im Verbund eine leichte aber trotzdem hochfeste verwindungssteife Verbindung erreicht werden soll.

Das Verbundbauteil kann durch beliebige Konstruktionselemente je nach Anwendungsbereich erweitert werden. Bevorzugt ist ein Verbundbauteil bei dem an den Profilen weitere Konstruktionselemente aus Kunststoff angespritzt sind, insbesondere Konstruktionselemente ausgewählt aus der Reihe: Schalen, Verstärkungsstreben, Schnapphaken, (wannenförmige) Kabelführung, Aufnahmen für andere Schnapphaken oder lösbare Verbindungen, Auflagen für einlegbare Verstrebungen oder Bretter oder Bleche, Wannen, insbesondere die untere Hälfte eines Kraftstofftanks oder die untere Hälfte eines Ölbehälters, Schalen für Helmablage und/oder Stauraum, für Karosseriestrukturteile und Radkappen.

Das Verbundbauteil erhält eine besondere Festigkeit wenn in einer alternativen bevorzugten Bauform das Verstärkungselement im Bereich der Anschlussstelle einstückig ausgebildet mit einem Profil vorgesehen ist, wobei die Profile in das Verstärkungselement vor dem Anspritzen des thermoplastischen Kunststoffs eingeschoben oder eingesteckt sind.

Die Stabilität des Verbundbauteiles kann in einer weiteren bevorzugten Ausbildung dadurch erhöht werden, dass in den Profilen und/oder dem Verstärkungselement an übereinanderliegenden Stellen der Profile und des Verstärkungselements Durchbrüche oder Bohrungen angebracht sind, durch die der thermoplastische Kunststoff hindurchragt und an denen der thermoplastische Kunststoff (10) verankert ist. Vorzugsweise sind die Durchbrüche oder Bohrungen mit Einzügen, Bördeln etc. versehen.

Die Stabilität des Verbundbauteiles kann auch in einer weiteren bevorzugten Ausbildung dadurch erhöht werden, dass in den Profilen und/oder dem Verstärkungselement an übereinanderliegenden Stellen der Profile und des Verstärkungselements Verformungen, insbesondere Sicken oder Wulste, vorgesehen sind, an denen der thermoplastische Kunststoff verankert ist.

Bevorzugt dient als thermoplastischer Kunststoff ein unverstärkter oder verstärkter oder gefüllter Kunststoff bevorzugt auf Basis von Polyamid (PA), Polyester, insbesondere Polyethylenterephthalat (PET), Polybutylenterephtalat (PBT), Polyolefin, insbesondere Polypropylen (PP), Polyethylen (PE), Styrolacrylnitrilcopolymer insbesondere Acrylnitril-Styrol-butadiencopolymer (ABS), Polycarbonat (PC), Polypropylenoxid (PPO), (PSO), Polyphenylensulfid (PPS), Polyimid (PI), (PEEK), Polyketon, syndiotaktisches Polystyrol (PS) oder eine mögliche Mischung dieser Kunststoffe eingesetzt ist.

Eine besondere Variante des Verbundbauteiles ist dadurch gekennzeichnet, dass das Ende des Verstärkungselements so ausgeformt ist, dass es die anderen Profile und die endständigen Ausformungen (Ausbuchtungen) aufnimmt. Für Spritzgussverfahren bevorzugt sind diese Enden mit vom Restprofil abweichenden Auszugsschrägen versehen.

Eine weitere Verbesserung des Verbundbauteiles besteht darin, dass am Ende des Verstärkungselementes Laschen angeformt (z.B. abgekantet) sind, die an den anderen angrenzenden Profilen anliegen, und durch übereinanderliegende Durchbrüche, Bohrungen oder Bohrungen mit Einzügen und mittels durchgespritztem thermoplastischen Kunststoff mit den anderen Profilen verbunden sind.

In einer bevorzugten weiteren Form weist das mittige Profil einen Profilrand auf, der so gestaltet ist, dass ein zusätzlicher Formschluss von unten mit den beiden, vom Verstärkungselement umfassten Profilen entsteht.

Weiterer Gegenstand der Erfindung ist die Verwendung des erfindungsgemäßen Verbundbauteils als Konstruktionselement für Maschinen, Fahrzeuge und Bauteile aller Art, insbesondere für Kraftfahrzeuge, Elektronikartikel, Haushaltsartikel, Baubedarf, Motorroller, Tretroller, Kickboard, Motorrad, Fahrrad, Tretmobil (wie Kettcar), Regal, Schrank, Küchenzeile, Waschmaschine, Trockner, Küchenmaschine (großer Mixer), Kopierer, Drucker, Scanner, Monitorständer, Schreibtischstütze, Computergehäuse, Stuhl, Tennisschläger, (Tritt)Leiter, Druckerständer, Bestuhlung in Fahrzeugen, Transportfahrzeuge ("Ameise"), Einkaufswagen, Pkw, Lkw, Anhänger, Wohnwagen, dreirädrige Fahrzeuge (mit Motor angetrieben und nichtangetrieben), Rollstühle, Hebel, Querlenker (Fahrzeug)

Gegenstand der Erfindung ist auch die Verwendung des Verbundbauteils als Strukturteil für Kraftfahrzeuge, insbesondere Türen, Stoßfänger, Träger, Front- und Heckteile für Pkws, Türschwellertragrahmen, A-Säule, B-Säule, C-Säule, Teile eines Spaceframes, Instrumententafelträger, Heckklappenträger, Dachrahmen, Lkw-Rahmen, Anhänger-Rahmen, Motorrollerrahmen, Rücksitzlehne.

Gegenstand der Erfindung sind außerdem Rahmen für Motorroller, Tretroller, Kickboard, Motorrad, Fahrrad, Tretmobil (wie Kettcar), Regal, Schrank, Küchenzeile, Waschmaschine, Trockner, Küchenmaschine (großer Mixer), Kopierer, Drucker, Scanner, Monitorständer, Schreibtischstütze, Computergehäuse, Stuhl, Tennisschläger, (Tritt)Leiter, Druckerständer, Bestuhlung in Fahrzeugen, Transportfahrzeuge ("Ameise"), Einkaufswagen, Pkw, Lkw, Anhänger, Wohnwagen, dreirädrige Fahrzeuge (mit Motor angetrieben und nichtangetrieben), Rollstühle, Hebel, Querlenker (Fahrzeug), aufweisend ein erfindungsgemäßes Verbundbauteil.

Die Erfindung wird nachfolgend anhand der Figuren durch die Beispiele, welche jedoch keine Beschränkung der Erfindung darstellen, näher erläutert.

### Es zeigen:

- Fig. 1: Ein Profil (1) mit endständiger Ausbuchtung (5), Profilquerschnitt (6) und Profilrand (7)
- Fig. 2: Ein Profil wie in Fig. 1, jedoch von der Rückseite gesehen
- Fig. 3: ein Verstärkungselement 2, mit Profilrand (7), Lasche (15) und Ausformung (8) am Profilende
- Fig. 4: den Zusammenbau des Verstärkungselementes 2 mit Profil (1), mit Überschneidung der Profilenden (5,8) Auszugsrichtung der Profile (9)
- Fig. 5: Zusammenbau des Verstärkungselementes 2 mit allen Profile (1, 3, 4) im Verbundbauteil mit angespritzem Kunststoff, in Form von Rippen (13), Profilrandumspritzung (10), Kunststoffdurchspritzung (12) und Rippenumgriff am Profil (11)
- Fig. 6: eine andere Ansicht des Verbundbauteiles nach Fig. 5, jedoch von oben gesehen, mit schematisch dargestelltem Profilverlauf (14)
- Fig. 7: eine andere Ansicht des Verbundbauteiles nach Fig. 5 und Fig. 6, jedoch von unten gesehen, die den Formschluss von Profilrand (7) des Profils (3) mit den seitlichen Profilen (1,4) zeigt
- Fig. 8: eine andere Ansicht des Verbundbauteiles nach Fig. 5, jedoch von hinten, die die Lasche (15) am Ende des Verstärkungselementes (2) zeigt
- Fig. 9: eine Schnittdarstellung des Kontaktes zwischen den Profilen (1,4,3) sowie dem Verstärkungselement (2)
- Fig. 10: Zusammenbau mehrer Profile (1,2,3,4) sowie 16,17,18), in Verwendung des beschriebenen Verbundbauteiles mit Knotenelement (1,2,3,4 und 13) und weiteren Profilen (16,17,18) zu einer Rahmenstruktur eines Motorrollers unter Verwendung von Kunststoffdurchspritzungen (12), Profilrandumspritzungen (10) und Rippenumgriffen am Profil (11).

### Beispiel

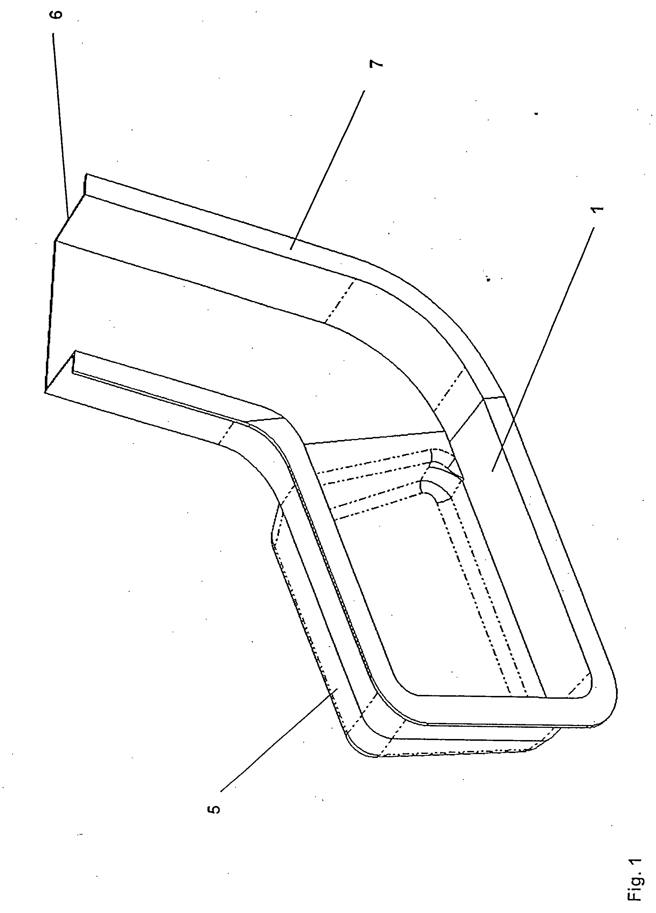

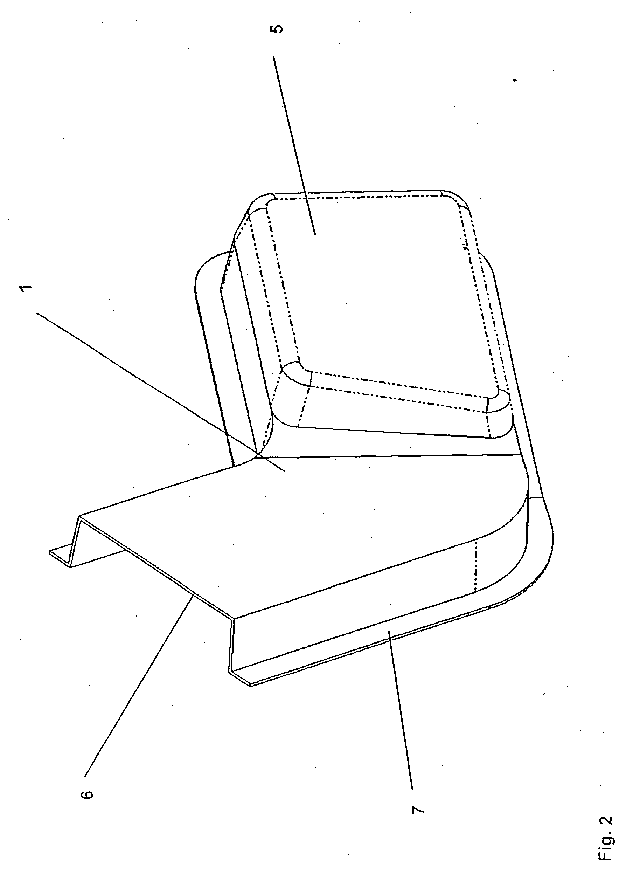

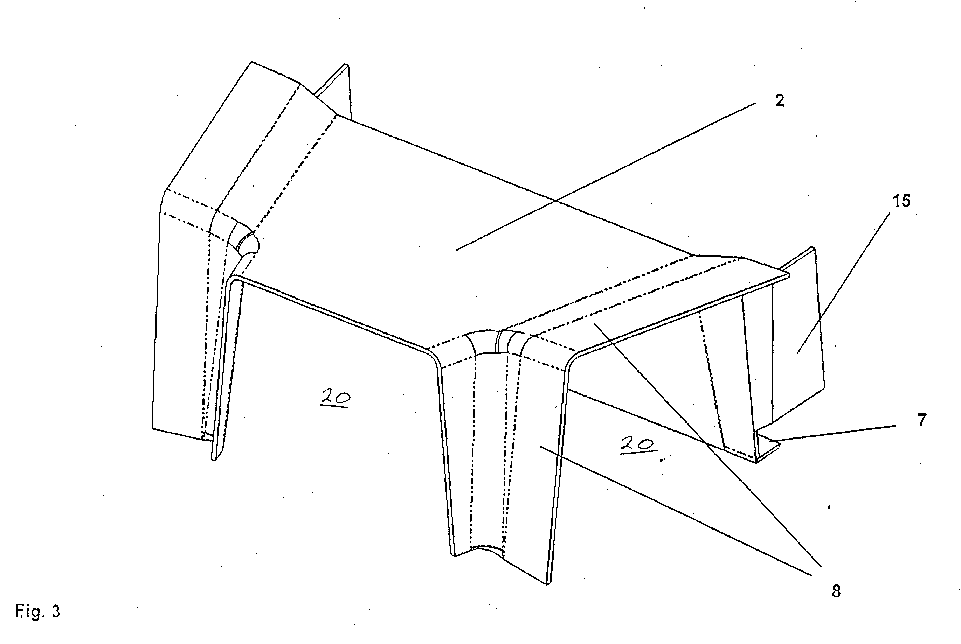

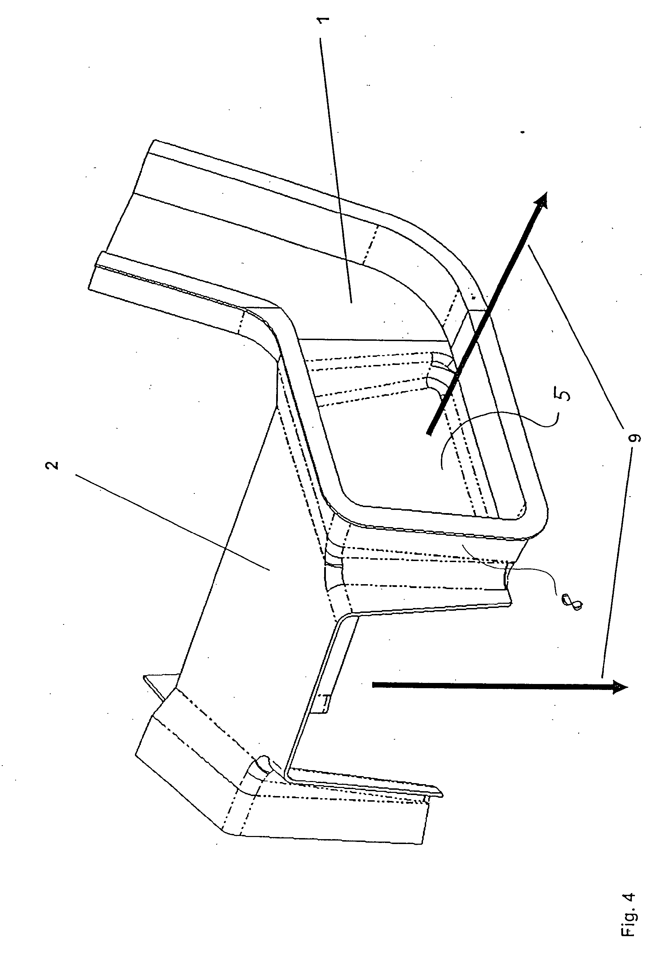

In diesem speziellen Fall eines Kunststoff-Metall-Verbundteiles wird ein Metallprofil 1, als Hut- oder U-Querschnitt (vergleiche Fig.1) aus Stahlblech (0,5 mm) ausgeführt. Am einen Ende bzw. an der Fügestelle zur Verbindung mit den weiteren Profilen 3 und 4 ist das Profil 1 tiefer ausgeführt als der Rest des Profils 1. An dieser Stelle ist ein tiefer ausgeformter "Topf" 5 als Ausbuchtung in das Profil 1 eingebracht (vergleiche Fig. 2). Dieser Topf 5 ermöglicht einen großflächigen Formschluss mit dem Verstärkungselement 2, einem besonders geformten Metallprofil (vergleiche Fig. 3), sodass eine größere Anlagefläche und mehr Verknüpfungspunkte mit dem Verstärkungselement 2 entstehen können. Das Verstärkungselement 2 weist an den Enden dem ersten Profil exakt angepaßte Profilränder 7, eine Lasche 15 und die Ausformung 8 auf, die das erste Profil 1 einseitig freigeben. Das Profil 1 ist zu dem Verstärkungselement 2 im Bereich des Knotenelementes um ca. 90 Grad (größere Abweichungen möglich) in seiner Längsachse gestellt, was z.B. bei der Anwendung als Leiterrahmen einsetzbar ist. Zusätzlich ist die Öffnungsrichtung des Profiles 1 zum Verstärkungselement 2 um ca. 90 Grad verdreht (vergleiche Fig. 4). Hierdurch ist eine leichte werkzeugtechnische Handhabung auch bei komplexeren Rahmenstrukturen als der gezeigten möglich. Fig. 4 gibt den Zusammenbau des Verstärkungselementes 2 mit Profil 1, mit Überschneidung der Profilenden 5 und der Auszugsrichtung 9 der Profile 1 und 2 wieder.

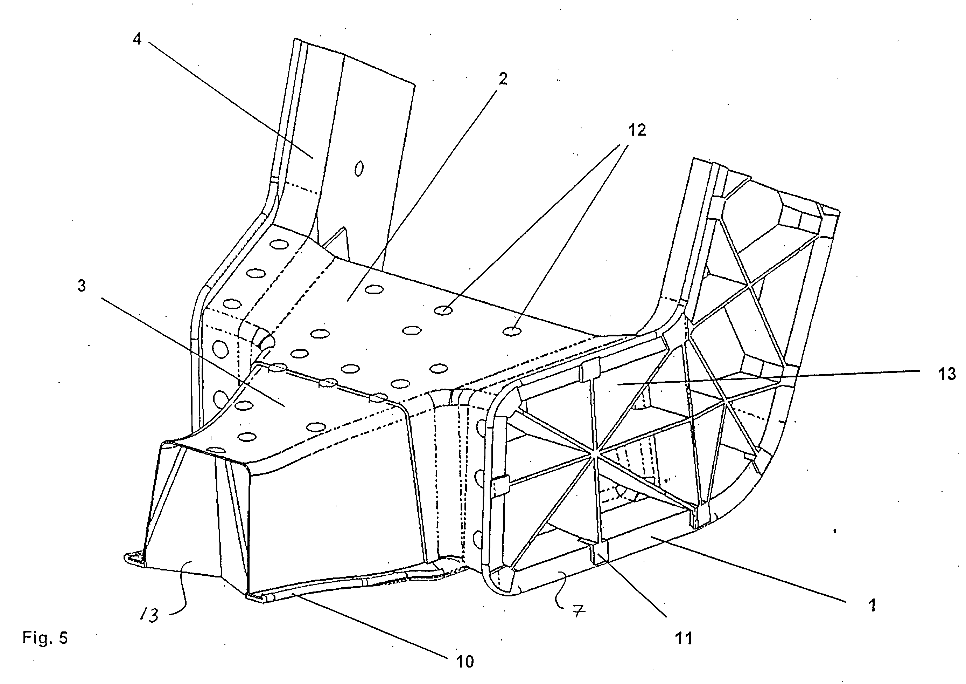

In Figur 5 ist der Zusammenbau des Verstärkungselementes 2 mit dem Profil 1 und einem spiegelbildlichen Profil 4 sowie einem weiteren u-förmigen Metallprofil 3 zum Verbundbauteil in einer Teilansicht zu sehen. Mit Hilfe von angespritztem thermoplastischem Kunststoff (glasfaserverstärktes Polyamid), in Form von Rippen 13, einer Profilrandumspritzung 10, einer Kunststoffdurchspritzung an mehreren übereinander liegenden Durchbrüchen 12 und einem Rippenumgriff 11 an den Profilen 1, 3, 4 werden diese mit einander verbunden und mechanisch erheblich verstärkt.

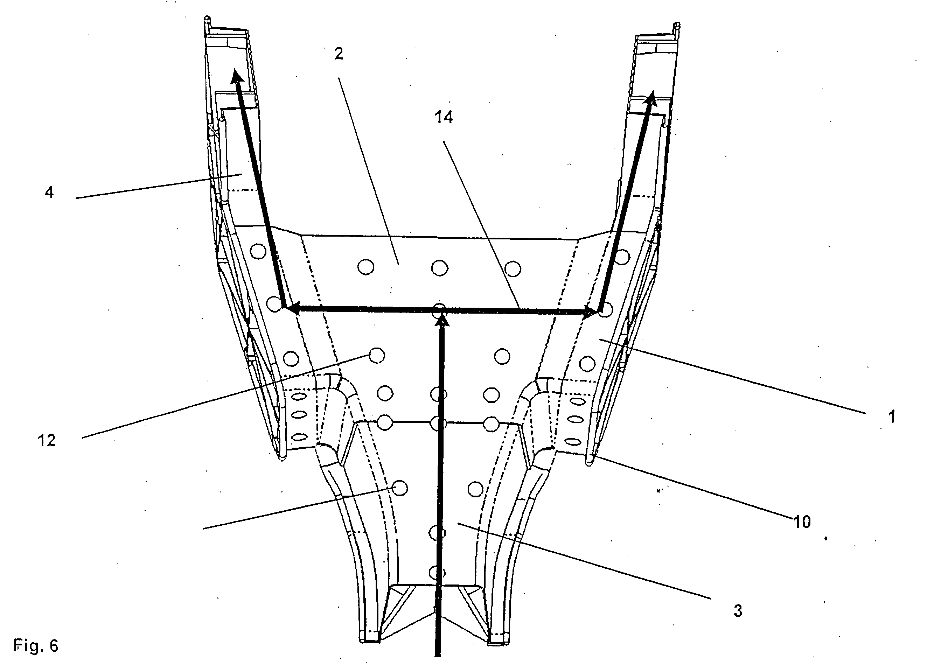

In Figur 6 eine andere Ansicht des Verbundbauteiles nach Fig. 5 von oben zu sehen, mit diagrammartig dargestelltem Profilverlauf 14. Hieraus wird noch einmal die Einpassung der Profile 1, 3, 4 in das Verstärkungselement 2 und ihre Verbindung unter einander deutlich.

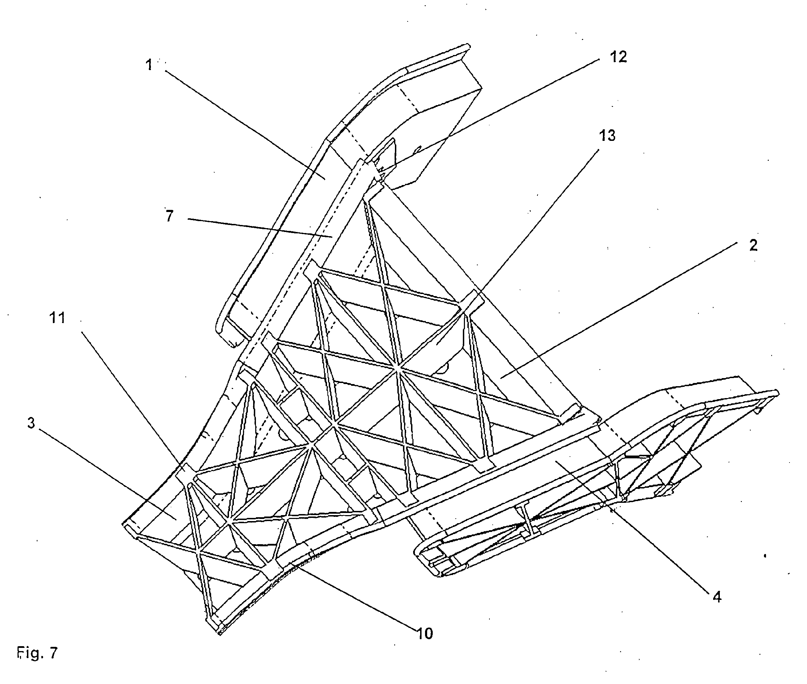

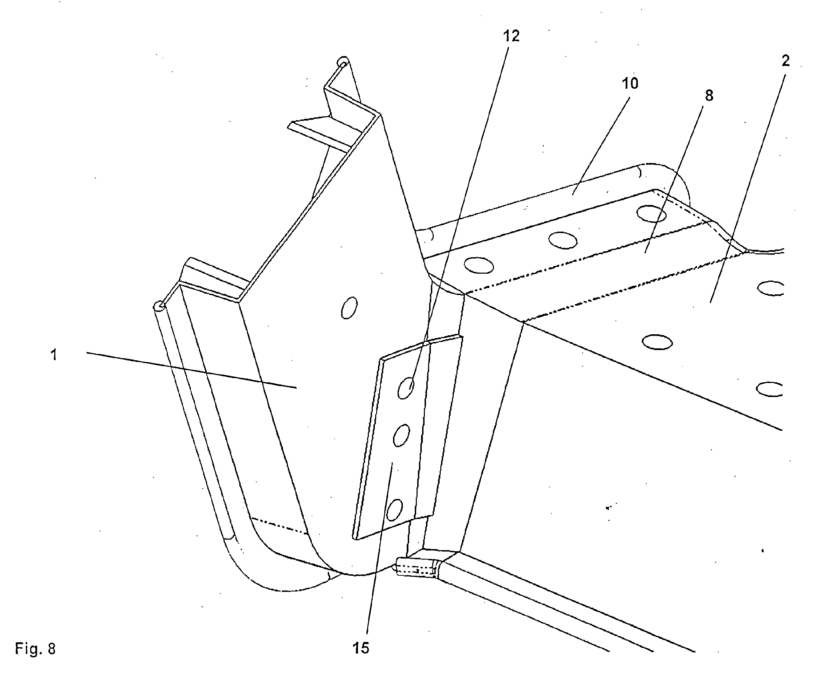

Aus Figur 7 wird noch eine andere Ansicht des Verbundbauteiles nach Fig. 5, nämlich von unten gesehen gezeigt. Diese Ansicht macht wiederum den Formschluss von Profilrand 7 des Profils 3 mit den seitlichen Profilen 1 und 4 deutlich. Zu sehen ist dabei auch die im dritten Profil angebrachte Rippenstruktur 13 aus Thermoplast. Figur 8 verdeutlicht noch im Ausschnitt wie das seitliche Profil 1 mit dem Verstärkungselement 2 über die Lasche 15 mit Kunststoffnietverbindungen an Durchbrüchen 12 verbunden ist.

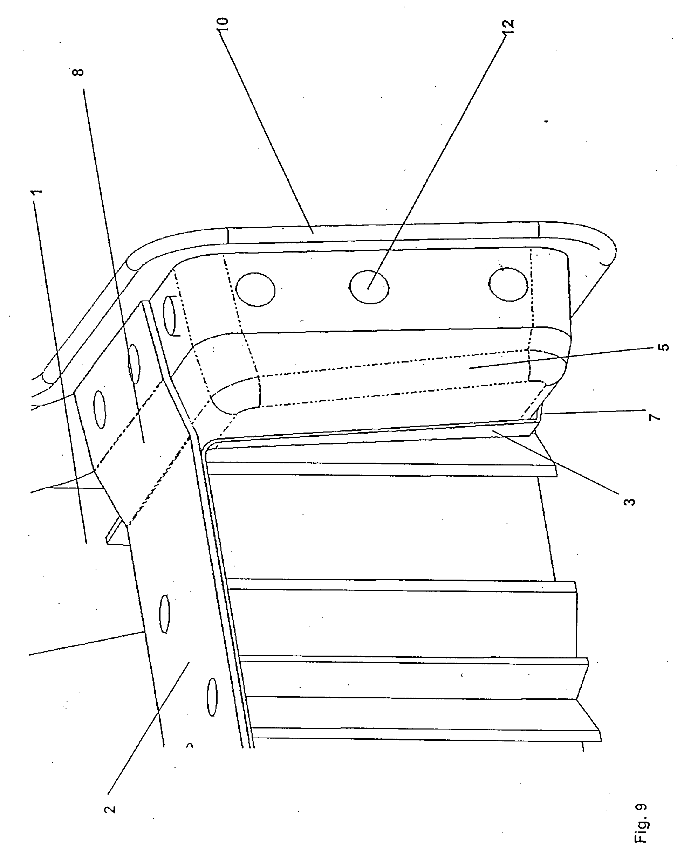

Aus dem Detail von Figur 9 geht zudem hervor wie die Ausbuchtung 5 des Profiles 1 mit dem angrenzenden Profil 3 flächigen Kontakt hat.

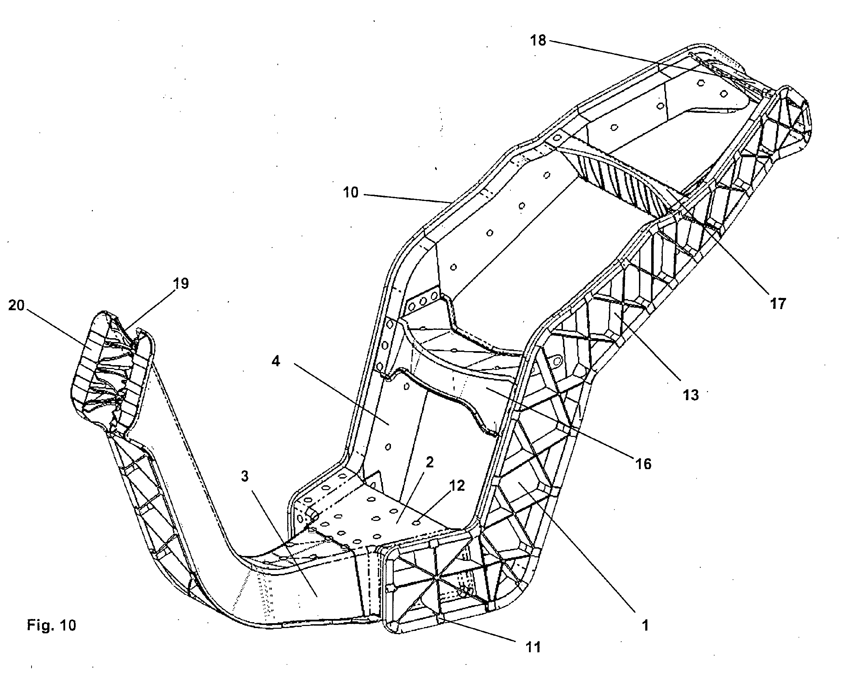

In Figur 10 ist die Gesamtansicht einer Anwendung des oben beschriebenen Verbundbauteiles dargestellt am Beispiel einer Rahmenstruktur eines Motorrollers. Durch eine symmetrische Anordnung der Profile 1 und 4 am Ende des Profils 3 kann ein stabiler hochfester Übergang von einem Bauteil (Profil 3) auf zwei Bauteile (Profile 1 und 4) realisiert werden (vergleiche Figur 10). Weiterhin wird auch hier Gebrauch gemacht vom dem Verstärkungselement 2, das den Übergang zwischen dem einzelnen Profil auf die beiden Profile verstärkt und den Verstärkungsstreben 13, die alle Profile und Übergänge verstärken. Durch weitere Verwendung von Profilen 16,17,18 wird eine Komplexe Rahmenstruktur aufgebaut. Alle Profile verfügen über eine Profilrandumspritzung 10, Kunststoffdurchspritzungen 12 und Rippenumgriffen 11. Zusätzlich verfügt dieses Beispiel eine zylinderförmige Aussparung 19 am Kopf von Profil 3, die die Lenksäure aufnehmen kann und einen verbreiterten Blechflansch 20, der eine gute Befestigung der Lenksäule ermöglicht.

## Patentansprüche

1. Verbundbauteil aus mindestens drei Profilen, bei dem jeweils zwei Profile (1, 4) mit einem freien Ende an ein weiteres anderes Profil (3) angrenzen, insbesondere miteinander Kontakt haben, oder ineinander eintauchen, wobei im Bereich der Anschlussstelle der Profile (1, 3, 4) mindestens ein Verstärkungselement (2) angebracht ist, das einen Formschluss mit den Profilen (1, 3, 4) bildet, und wobei die Profile (1, 3, 4) durch im Bereich der Anschlussstelle angespritzten thermoplastischen Kunststoff (10, 11, 12, 13) miteinander verbunden sind, **dadurch gekennzeichnet, dass** mindestens zwei Profile (1, 4) endständig Ausbuchtungen (5) aufweisen, die von dem Verstärkungselement (2) umfasst sind.

2. Verbundbauteil nach Anspruch 1, **dadurch gekennzeichnet, dass** die Profile (1, 3, 4) unabhängig voneinander einen geschlossenen, insbesondere einen runden oder rechteckigen oder einen offenen, insbesondere U-förmigen Querschnitt (6) aufweisen.

3. Verbundbauteil nach einem der Ansprüche 1 bis 2, **dadurch gekennzeichnet, dass** das Verstärkungselement (2) aus Metall, insbesondere Stahl, Aluminium oder Magnesium, aus Keramik oder hochfestem Kunststoff, insbesondere Duromeren oder langfaserverstärktem Kunststoff oder aus Kunststoffen besteht, die mit technischen Textilien verstärkt sind.

4. Verbundbauteil nach einem der Ansprüche 1 bis 3, **dadurch gekennzeichnet, dass** das Verstärkungselement (2) als Halbschale ausgebildet ist.

5. Verbundbauteil nach einem der Ansprüche 1 bis 4, **dadurch gekennzeichnet, dass** das Verstärkungselement (2) mit zusätzlichen Verstärkungsstreben (13) versehen ist.

6. Verbundbauteil nach einem der Ansprüche 1 bis 5, **dadurch gekennzeichnet, dass** die Ausbuchtungen (5) der Profile (1, 4) flächigen Kontakt mit dem angrenzenden weiteren Profil (3) haben.

7. Verbundbauteil nach einem der Ansprüche 1 bis 6, **dadurch gekennzeichnet, dass** die Profile (1, 3, 4) unabhängig voneinander einen Verstärkungsrand (7) aufweisen.

8. Verbundbauteil nach einem der Ansprüche 1 bis 7, **dadurch gekennzeichnet, dass** die Profile (1, 3, 4) und das Verstärkungselement (2) unabhängig voneinander eine Kantenumspritzung (10) mit thennoplastischem Kunststoff aufweisen.

9. Verbundbauteil nach einem der Ansprüche 1 bis 8, **dadurch gekennzeichnet, dass** die Profile (1, 3, 4) im Bereich ihrer Anschlussstelle in einer Ebene angeordnet sind.

10. Verbundbauteil nach einem der Ansprüche 1 bis 9, **dadurch gekennzeichnet, dass** an den Profilen (1, 3, 4) weitere Konstruktionselemente aus Kunststoff angespritzt sind, insbesondere ausgewählt aus der Reihe Schalen, Verstärkungsstreben (13), Schnapphaken, (wannenförmige) Kabelführung, Aufnahmen für andere Schnapphaken oder lösbare Verbindungen, Auflagen für einlegbare Verstrebungen/Bretter/Bleche, Wannen, insbesondere die untere Hälfte eines Kraftstofftanks oder die untere Hälfte eines Ölbehälters, Schale für Helmablage und/oder Stauraum, Karosseriestruktur und Radkappen.

11. Verbundbauteil nach einem der Ansprüche 1 bis 10, **dadurch gekennzeichnet, dass** das Verstärkungselement (2) im Bereich der Anschlussstelle einstückig mit einem Profil (3) vorgesehen ist, wobei die Profile (1, 4) in das Verstärkungselement (2) vor dem Anspritzen des thermoplastischen Kunststoffs eingeschoben oder eingesteckt sind.

12. Verbundbauteil nach einem der Ansprüche 1 bis 11, **dadurch gekennzeichnet, dass** in den Profilen (1, 3, 4) und/oder dem Verstärkungselement (2) an übereinanderliegenden Stellen der Profile (1, 3, 4) und des Verstärkungselements (2) Durchbrüche (12) oder Bohrungen angebracht sind, vorzugsweise Durchbrüche (12) oder Bohrungen die mit Einzügen, Bördeln etc. versehen sind, durch die der thermoplastische Kunststoff hindurchragt und an denen der thermoplastische Kunststoff (10) verankert ist.

13. Verbundbauteil nach einem der Ansprüche 1 bis 12, **dadurch gekennzeichnet, dass** in den Profilen (1, 3, 4) und/oder dem Verstärkungselement (2) an übereinanderliegenden Stellen der Profile (1, 3, 4) und des Verstärkungselements (2) Verformungen, insbesondere Sicken oder Wulste, vorgesehen sind, an denen der thermoplastische Kunststoff verankert ist.

14. Verbundbauteil nach einem der Ansprüche 1 bis 13, **dadurch gekennzeichnet, dass** als thermoplastischer Kunststoff ein unverstärkter oder verstärkter oder gefüllter Kunststoff bevorzugt auf Basis von Polyamid (PA), Polyester, insbesondere Polyethylenterephthalat (PET), Polybutylenterephtalat (PBT), Polyolefin, insbesondere Polypropylen (PP), Polyethylen (PE), Styrolacrylnitrilcopolymer insbesondere Acrylnitril-Styrol-butadiencopolymer (ABS), Polycarbonat (PC), Polypropylenoxid (PPO), (PSO), Polyphenylensulfid (PPS), Polyimid (PI), (PEEK), Polyketon, syndiotaktisches Polystyrol (PS) oder eine mögliche Mischung dieser Kunststoffe eingesetzt ist.

15. Verbundbauteil nach einem der Ansprüche 1 bis 14, **dadurch gekennzeichnet, dass** das Ende des Verstärkungselements (2) so ausgeformt ist, dass es die anderen Profile (1,4) und die endständigen Ausformungen (5) aufnimmt.

16. Verbundbauteil nach einem der Ansprüche 1 bis 15, **dadurch gekennzeichnet, dass** am Ende des Verstärkungselementes Laschen angeformt (z.B. abgekantet) sind, die an den anderen Profilen (1,4) anliegen, und durch übereinanderliegende Durchbrüche, Bohrungen oder Bohrungen mit Einzügen und mittels durchgespritztem thermoplastischen Kunststoff (12) mit den anderen Profilen (1,4) verbunden sind.

17. Verbundbauteil nach einem der Ansprüche 1 bis 16, **dadurch gekennzeichnet, dass** das mittige Profil (3) einen Profilrand aufweist, der so gestaltet ist, dass ein zusätzlicher Formschluss von unten mit den beiden, vom Verstärkungselement (2) umfassten Profilen (1,4) entsteht.

18. Verwendung des Verbundbauteils nach einem der Ansprüche 1 bis 17 als Konstruktionselement für Maschinen, Fahrzeuge und Bauteile aller Art, insbesondere für Kraftfahrzeuge, Elektronikartikel, Haushaltsartikel, Baubedarf, Motorroller, Tretroller, Kickboard, Motorrad, Fahrrad, Tretmobil (wie Kettcar), Regal, Schrank, Küchenzeile, Waschmaschine, Trockner, Küchenmaschine (großer Mixer), Kopierer, Drucker, Scanner, Monitorständer, Schreibtischstütze, Computergehäuse, Stuhl, Tennisschläger, (Tritt)Leiter, Druckerständer, Bestuhlung in Fahrzeugen, Transportfahrzeuge ("Ameise"), Einkaufswagen, Pkw, Lkw, Anhänger, Wohnwagen, dreirädrige Fahrzeuge, Rollstühle, Hebel, Querlenker (Fahrzeug)

19. Verwendung des Verbundbauteils nach einem der Ansprüche 1 bis 18 als Strukturteil für Kraftfahrzeuge, insbesondere Türen, Stoßfänger, Träger, Front- und Heckteile für Pkws, Türschwellertragrahmen, A-Säule, B-Säule, C-Säule, Teile eines Spaceframes, Instrumententafelträger, Heckklappenträger, Dachrahmen, Lkw-Rahmen, Anhänger-Rahmen, Motorrollerrahmen, Rücksitzlehne.

20. Rahmen für Motorroller, Tretroller, Kickboard, Motorrad, Fahrrad, Tretmobil, Regal, Schrank, Küchenzeile, Waschmaschine, Trockner, Küchenmaschine (großer Mixer), Kopierer, Drucker, Scanner, Monitorständer, Schreibtischstütze, Computergehäuse, Stuhl, Tennisschläger, (Tritt)Leiter, Druckerständer, Bestuhlung in Fahrzeugen, Transportfahrzeuge, Einkaufswagen, Pkw, Lkw, Anhänger, Wohnwagen, dreirädrige Fahrzeuge, Rollstühle, Hebel, Querlenker (Fahrzeug), aufweisend ein Verbundbauteil nach einem der Ansprüche 1 bis 18.
